(19) Europäisches Patentamt / European Patent Office / Office européen des brevets

(11) **EP 4 141 489 B1**

(12) ## EUROPEAN PATENT SPECIFICATION

(45) Date of publication and mention
of the grant of the patent:
**28.01.2026   Bulletin 2026/05**

(21) Application number: **21193182.9**

(22) Date of filing: **26.08.2021**

(51) International Patent Classification (IPC):
***G01S 19/07*** (2010.01)

(52) Cooperative Patent Classification (CPC):
**G01S 19/074**

(54) **METHOD AND SYSTEM OF BOUNDING AT USER EQUIPMENT QUANTIZATION ERRORS FOR INTEGRITY DETERMINATION BASED ON MESSAGE TYPES LIKE MT 28 OR MT 32/40 IN SATELLITE BASED AUGMENTATION SYSTEMS**

VERFAHREN UND SYSTEM ZUR BEGRENZUNG VON QUANTISIERUNGSFEHLERN BEI BENUTZERGERÄTEN ZUR INTEGRITÄTSPRÜFUNG BASIEREND AUF NACHRICHTENTYPEN WIE MT 28 ODER MT 32/40 IN SATELLITENGESTÜTZTEN AUGMENTIERUNGSSYSTEMEN

PROCÉDÉ ET SYSTÈME DE LIMITATION D'ERREURS DE QUANTIFICATION AU NIVEAU DE L'ÉQUIPEMENT UTILISATEUR POUR LA DÉTERMINATION DE L'INTÉGRITÉ BASÉE SUR DES TYPES DE MESSAGES TELS QUE MT 28 OU MT 32/40 DANS LES SYSTÈMES D'AUGMENTATION BASÉS SUR SATELLITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023   Bulletin 2023/09**

(73) Proprietor: **Airbus Defence and Space GmbH
82024 Taufkirchen (DE)**

(72) Inventor: **FRANKENBERGER, Harald
82024 Taufkirchen (DE)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
- **WALTER TODD ET AL: "Message Type 28", NTM 2001 - PROCEEDINGS OF THE 2001 NATIONAL TECHNICAL MEETING OF THE INSTITUTE OF NAVIGATION, 24 January 2001 (2001-01-24), pages 522 - 532, XP056004641**
- **CATAL�N C ET AL: "Improved Integrity Concept for Future GNSS Evolutions", GNSS 2008 - PROCEEDINGS OF THE 21ST INTERNATIONAL TECHNICAL MEETING OF THE SATELLITE DIVISION OF THE INSTITUTE OF NAVIGATION (ION GNSS 2008), 19 September 2008 (2008-09-19), pages 2547 - 2557, XP056002827**
- **AUTHI� T ET AL: "Integrity Based on MT28 for EGNOS: New Algorithm Formulation & Results", GNSS 2017 - PROCEEDINGS OF THE 30TH INTERNATIONAL TECHNICAL MEETING OF THE SATELLITE DIVISION OF THE INSTITUTE OF NAVIGATION (ION GNSS+ 2017), 29 September 2017 (2017-09-29), pages 1077 - 1088, XP056014338**

**Description**

FIELD OF THE INVENTION

The present invention relates to a method of calculating quantization errors in Satellite Based Augmentation Systems (SBAS) and an apparatus for calculating quantization errors. The method is achieved by calculating the line-of-sight vector of a user to the satellite and then calculating the degradation term due to quantization which is needed in the characterization of the residual range error associated with the orbit corrections and clock corrections.

BACKGROUND TO THE INVENTION

Satellite based augmentation systems (SBAS) monitor one or more global navigation satellite systems (GNSS) to determine corrections and integrity parameters for navigation messages broadcast by such GNSS. These corrections and integrity parameters are provided to the users of the SBAS. Corrections enhance the mentioned GNSS navigation messages allowing users to calculate more accurate positions. Integrity parameters enable users to calculate their personal so-called protection levels.

One part of the integrity parameters determined by the SBAS are the covariance matrices modeling the error in monitoring the satellite ephemeris and the satellite clock corrections. For the purpose of calculating its protection level, any user needs the projection of these covariance matrices onto their (four dimensional) line-of-sight vector.

For the purpose of bandlimited broadcasting, each covariance matrix belonging to a dedicated satellite is split into its fast and slow varying parts which results essentially in the so-called discretized $\sigma_{XXRE,\text{uninflated}}$ representing the fast varying part and in the following discretized Cholesky-factor together with its scale

$$E := \text{round}\left(\left(R / \sqrt{P_{\min}}\right) \cdot 2^{5-scale}\right), \qquad (1.1)$$

representing the slow varying part of the covariance matrix wherein an appropriate upper triangular 4 by 4 matrix is represented by $R$ and an appropriate positive scaling factor is represented by $P_{\min}$.

For single frequency service the upper triangular matrix $E$ and the scalar value *scale* are broadcast by message type 28 (MT28), and for dual frequency service the upper triangular matrix $E$ and the scalar value *scale* are broadcast by message type 32 (MT32) for GNSS satellites and by message type 40 (MT40) for SBAS satellites.

It is common practice to account for the quantization error on the system side by calculating its effect for a finite number of user positions in the service area and inflating a raw $\sigma_{XXRE,\text{uninflated}}$ to cover this effect on user's side, i.e.

1. The system calculates for a finite number of user positions in the service area an approximation of

$$\lambda_{quant}^2 := \max_{u \in service\ area} \frac{\| Ru \|_2^2 / P_{\min}}{\left( \| (2^{scale-5} \cdot E)u \|_2 + 2^{scale-5} \cdot C_{COVARIANCE} \right)^2} \qquad (1.2)$$

where u is a four dimensional line-of-site vector pointing from the user position $r_{user}$ to the satellite position $R_{SV}$ in a suitable coordinate frame, in accordance to MOPS, given by

$$\begin{bmatrix} \dfrac{R_{SV} - r_{user}}{\|R_{SV} - r_{user}\|_2} \\ 1 \end{bmatrix} \qquad (1.3)$$

2. Furthermore, system provides $C_{COVARIANCE}$ via MT10 and MT37 respectively for single or dual frequency services.
3. System broadcasts the discretized value of

$$\sigma_{XXRE}^2 := \lambda_{quant}^2 \cdot \sigma_{XXRE,\text{uninflated}}^2 \qquad (1.4)$$

instead of the discretized value of raw $\sigma_{XXRE,\text{uninflated}}^2$.
4. At the user's side, calculation of so-called $\sigma_{flt}$ characterizing the residual range error associated with the orbit corrections and clock corrections is performed via

$$\sigma^2_{flt} := \sigma^2_{XXRE} \cdot \left( \| Ev \|_2 + C_{COVARIANCE} \right)^2 \cdot 2^{2(scale-5)} \qquad (1.5)$$

where $v$ is user's line-of-sight vector according to (1.3).

As a result of the above conventional approach, there is the need for a representative user grid on system side in order to reach a sufficient approximation level of the true quantization effect $\lambda_{quant}$ via (1.2), with the following implications:

   a. The bigger the number of users to be tested the better is the approximation level.
   b. The smaller the number of users to be tested the smaller is the needed computing time.
   c. Technically, a process may be necessary to verify integrity due to approximating infinitely many users in a maximum-calculation by a finite set which may result in a smaller value.

Furthermore, parameter $C_{COVARIANCE}$ has to be broadcast by system to users and the application of the same $\lambda_{quant}$ via (1.4) to each user means that there is an overestimation of the quantization effect on individual users.
There is therefore a need for a method of accounting for quantization errors which may result in a reduction of the computational time at the SBAS side and may not need an additional process to verify integrity due to approximating infinitely many users by a finite set.
Prior art can be found in Walter Todd et al, "Message Type 28", NTM 2001 - Proceedings of the 2001 National Technical Meeting of the Institute of Navigation, 24 January 2001, pages 522-532, in Catalan C et al, "Improved Integrity Concept for Future GNSS Evolutions", GNSS 2008 - Proceedings of the 21st International Technical Meeting of the Satellite Division of the Institute of Navigation (ION GNSS 2008), 19 September 2008, pages 2547-2557 and in Authie T et al, "Integrity Based on MT28 for EGNOS: New Algorithm Formulation & Results", GNSS 2017 - Proceedings of the 30th International Technical Meeting of the Satellite Division of the Institute of Navigation (ION GNSS + 2017), 29 September 2017, pages 1077-1088.

## SUMMARY OF THE INVENTION

The invention is set out in the independent claims. Preferred embodiments of the invention are set out in the dependent claims.
According to a first aspect, we describe a method for accounting for quantization errors in a Satellite Based Augmentation System, SBAS. The method comprises transmitting, by an SBAS, integrity parameters of a satellite. The method further comprises receiving, by a user equipment, the integrity parameters of the satellite. The method further comprises calculating, by the user equipment, the degradation term of the quantization of the transmission. The method further comprises calculating, by the user equipment, a value characterizing the residual range error associated with the orbit corrections and clock corrections belonging to the satellite.
This may result in no need for a user grid on the system side in order to account for the quantization effect. This may further result in a reduced computing time and an elimination of the process to verify the integrity necessary due to the method approximating infinitely by only a finite set of users.
The calculation of the degradation term at the user side may also eliminate the need for the degradation term to be broadcasted to the user. This in turn may result in spare bits in the data packets sent from the satellite to the user equipment.
The skilled person knows via their common general knowledge methods of calculating orbit corrections and clock corrections belonging to the satellite.
In some examples, the quantization errors are accounted for in MT 28-like or MT 32/40-like covariance information transmitted by the SBAS. In some examples, the transmission of the integrity parameters allows for a transmission without accounting for these quantization errors by the SBAS itself. In some examples, the satellite is used for ranging.
In some examples, the degradation term is calculated by calculating a line-of-sight vector, wherein the line-of-sight vector determines a distance vector between the user equipment and the satellite and calculating the degradation term due to the quantization of the transmission by using elements of the calculated line-of-sight vector. By calculating the line-of-sight vector, the user equipment may accurately calculate the distance between the satellite and the user equipment in 4 dimensions (x-positon, y-position, z-position and time). By calculating the degradation term due to the quantization of the transmission by using elements of the line-of-sight vector, the user equipment may be able to separate the line-of-sight vector into its various components and perform an accurate calculation of the degradation term.
In some examples, the line-of-sight vector is calculated by the vector:

$$\left[ \begin{array}{c} \dfrac{R_{SV} - r_{user}}{\left\| R_{SV} - r_{user} \right\|_2} \\ \pm 1 \end{array} \right]$$

wherein $R_{SV}$ is the satellite position, $r_{user}$ is the user position and the sign of the $\pm 1$ is dependent on the modeling of the satellite clock error.

In some examples, the degradation term is calculated by:

$$v := [\alpha_1, \alpha_2, \alpha_3, \pm 1]^T \quad \text{with } \alpha_1^2 + \alpha_2^2 + \alpha_3^2 = 1$$

wherein $\alpha_1$, $\alpha_2$ and $\alpha_3$ are the first three elements of the line-of-sight vector, and by:

$$C_1(\alpha_1, \alpha_2, \alpha_3) := \left( |\alpha_1| + |\alpha_2| + |\alpha_3| + 1 \right)^2 ;$$

$$C_2(\alpha_2, \alpha_3) := \left( |\alpha_2| + |\alpha_3| + 1 \right)^2 ;$$

$$C_3(\alpha_3) := \left( |\alpha_3| + 1 \right)^2 ;$$

and

$$C_{COVARIANCE}(v) := \frac{1}{2} \sqrt{C_1(\alpha_1, \alpha_2, \alpha_3) + C_2(\alpha_2, \alpha_3) + C_3(\alpha_3) + 1}$$

wherein $C_{COVARIANCE}(v)$ is the degradation term. This may allow for an accurate degradation term to be calculated at the user side, thereby eliminating the need for the broadcasting of the degradation term from the satellite to the user.

According to the first aspect, the characterization of the residual range error associated with the orbit corrections and clock corrections is calculated by:

$$\sigma_{flt}^2 := \sigma_{XXRE,\text{uninflated}}^2 \cdot \left( \|Ev\|_2 + C_{COVARIANCE}(v) \right)^2 \cdot 2^{2(scale-5)}$$

wherein $\sigma_{flt}$ is the characterization of the residual range error, wherein $\sigma_{XXRE,\text{uninflated}}^2$ is the characterization of the fast varying part of the covariance matrix belonging to a dedicated satellite, wherein E is a discretized Cholesky factor characterizing together with its scale the slow varying part of the covariance matrix, and wherein v is the line-of-sight vector and $C_{COVARIANCE}(v)$ is the degradation term of the quantization. In some examples, the orbit corrections and clock corrections belong to a dedicated satellite.

In some examples, if a user equipment cannot calculate the degradation term of the quantization, the degradation term used by the user equipment is the transmitted value $C_{COVARIANCE}$ provided by system via an MT10-like or an MT37-like message.

In some examples, if a user equipment cannot calculate the degradation term of the quantization, the degradation term is a value larger than an upper bound of a quantization effect, wherein the value of the degradation term is greater than $\sqrt{19}/2$. In some examples, the transmitted degradation term used when the degradation term cannot be calculated is 2.2. The degradation term may be any suitable number which still allows for suitable reading while the degradation term cannot be calculated. The transmitted degradation term $C_{COVARIANCE}$ used when it cannot be calculated may depend on the number of bits used by the system for transmitting $C_{COVARIANCE}$ and is preferably greater than $\sqrt{19}/2$.

In some examples, not all of the above method steps are required. In some examples, the steps may be in a different order. In some examples, some of the steps happen simultaneously.

In some examples, the degradation term is calculated due to the quantization error which is needed in the characterization of the residual range error associated with the orbit corrections and clock corrections.

In some examples, the quantization is defined by $E := \text{round}\left(\left(R / \sqrt{P_{\min}}\right) \cdot 2^{5-scale}\right)$ and/or the quantization error is defined by $P - E = \begin{pmatrix} \delta_1 & \delta_5 & \delta_6 & \delta_7 \\ 0 & \delta_2 & \delta_8 & \delta_9 \\ 0 & 0 & \delta_3 & \delta_{10} \\ 0 & 0 & 0 & \delta_4 \end{pmatrix}$ .

According to a second aspect, we describe a system for accounting for quantization errors in a Satellite Based Augmentation System, SBAS. The system comprises a first satellite, wherein the first satellite comprises a transmitter configured to transmit integrity parameters of a second satellite. The system further comprises a user equipment, wherein the user equipment comprises a receiver configured to receive the transmitted integrity parameters of the second satellite, wherein the user equipment further comprises a processor coupled to the receiver and configured to calculate a degradation term due to the quantization of the transmission and a value characterizing the residual range error associated with the orbit corrections and clock corrections belonging to the second satellite.

This may result in no need for a user grid on the system side in order to account for the quantization effect. This may further result in a reduced computing time and an elimination of the process to verify the integrity necessary due to the method approximating infinitely by only a finite set of users.

The calculation of the degradation term at the user side may also eliminate the need for the degradation term to be broadcasted to the user. This in turn may result in spare bits in the data packets sent from the satellite to the user equipment.

In some examples, the quantization errors are accounted for in MT 28-like or MT 32/40-like covariance information transmitted by the SBAS. In some examples, the transmission of the integrity parameters allows for a transmission without accounting for these quantization errors by the SBAS itself. In some examples, the satellite is used for ranging. In some examples, the second satellite is a satellite suitable for ranging, different from the first satellite. In some examples, the first satellite and the second satellite are the same satellite.

In some examples, the processor of the user equipment is configured to calculate the degradation term of the quantization by calculating a line-of-sight vector, wherein the line-of-sight vector determines a distance vector between the user equipment and the second satellite and calculating the degradation term of the quantization by using elements of the calculated line-of-sight vector. By calculating the line-of-sight vector, the user equipment may accurately calculate the distance between the satellite and the user equipment in 4 dimensions (x-positon, y-position, z-position and time). By calculating the degradation term of the quantization by using elements of the line-of-sight vector, the user equipment may be able to separate the line-of-sight vector into its various components and perform an accurate calculation of the degradation term.

In some examples, the processor is further configured calculate the line-of-sight vector by the vector:

$$\begin{bmatrix} \dfrac{R_{SV} - r_{user}}{\left\| R_{SV} - r_{user} \right\|_2} \\ \pm 1 \end{bmatrix}$$

wherein $R_{SV}$ is the second satellite position, $r_{user}$ is the user position and the sign of the $\pm 1$ is dependent on the modeling of the satellite clock error.

In some examples, the processor is further configured to calculate the degradation term by:

$$v = [\alpha_1, \alpha_2, \alpha_3, \pm 1]^T \quad \text{with } \alpha_1^2 + \alpha_2^2 + \alpha_3^2 = 1$$

wherein $\alpha_1$, $\alpha_2$ and $\alpha_3$ are the first three elements of the line-of-sight vector, and by:

$$C_1(\alpha_1, \alpha_2, \alpha_3) := \left( |\alpha_1| + |\alpha_2| + |\alpha_3| + 1 \right)^2 ;$$

$$C_2(\alpha_2, \alpha_3) := \left( |\alpha_2| + |\alpha_3| + 1 \right)^2 ;$$

$$C_3(\alpha_3) := \left(|\alpha_3| + 1\right)^2 \ ;$$

and

$$C_{COVARIANCE}(v) := \frac{1}{2}\sqrt{C_1(\alpha_1, \alpha_2, \alpha_3) + C_2(\alpha_2, \alpha_3) + C_3(\alpha_3) + 1}$$

wherein $C_{COVARIANCE}(v)$ is the degradation term. This may allow for an accurate degradation term to be calculated at the user side, thereby eliminating the need for the broadcasting of the degradation term from the satellite to the user.

According to the second aspect, the processor of the user equipment is configured to calculate the characterization of the residual range error associated with the orbit corrections and clock corrections by:

$$\sigma_{flt}^2 := \sigma_{XXRE,\text{uninflated}}^2 \cdot \left(\| Ev \|_2 + C_{COVARIANCE}(v)\right)^2 \cdot 2^{2(scale-5)}$$

wherein $\sigma_{flt}$ is the characterization of the residual range error, wherein $\sigma_{XXRE,\text{uninflated}}^2$ is the characterization of the fast varying part of the covariance matrix belonging to the second satellite, wherein E is a discretized Cholesky factor characterizing together with its scale the slow varying part of the covariance matrix, and wherein v is the line-of-sight vector and $C_{COVARIANCE}(v)$ is the degradation term of the quantization. In some examples, the orbit corrections and clock corrections belong to a dedicated satellite. In some examples, the dedicated satellite is the second satellite. In some examples, the dedicated satellite is the first satellite.

In some examples, if the processor of a user equipment cannot calculate the degradation term of the quantization, the degradation term used by the user equipment is the transmitted value $C_{COVARIANCE}$ provided by system via an MT10-like or an MT37-like message.

In some examples, if a user equipment cannot calculate the degradation term of the quantization, the degradation term is a value larger than an upper bound of a quantization effect, wherein the value of the degradation term is greater than $\sqrt{19}/2$.

In some examples, the transmitted degradation term used when the degradation term cannot be calculated is 2.2. The degradation term may be any suitable number which still allows for suitable reading while the degradation term cannot be calculated. The transmitted degradation term $C_{COVARIANCE}$ used when it cannot be calculated depends on the number of bits used by the system for transmitting $C_{COVARIANCE}$ and has to be greater than $\sqrt{19}/2$.

The above described aspects may allow for the discretized raw $\sigma_{XXRE,\text{uninflated}}^2$ to be broadcasted itself (without inflation by $\lambda_{quant}$) rendering the user grid for calculating $\lambda_{quant}$ is obsolete. Furthermore, the above described aspects may allow for the elimination of a user grid on the SBAS side to account for the quantization effect. This may result in a reduction in computing time and an elimination of the process which verifies the integrity of the results due to the aspects approximating only a finite set of users. Additionally, there may be no need to broadcast parameter $C_{COVARIANCE}$ by the SBAS to the users and there may be no overestimation of the quantization effect on individual users (due to a max-over-all-users-calculation) as each single user derives the quantization effect on its own.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the processing unit may be implemented at least partially as a computer, a logical circuit, an FPGA (Field Programmable Gate Array), a processor (for example, a microprocessor, microcontroller ($\mu$C) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefore, methods like swapping and paging can be deployed.

Even if some of the aspects described above have been described in reference to the arrangement, these aspects may also apply to the method and vice versa.

BRIEF DESCRIPTION OF THE DRAWINGS

These and other aspects of the invention will now be further described, by way of example only, with reference to the accompanying figures, wherein like reference numerals refer to like parts, and in which:

Figure 1    shows a flow diagram of a method of calculating quantization errors according to an embodiment described herein; and

Figure 2    shows a block diagram of a system for calculating quantization errors according to an embodiment as described herein.

DETAILED DESCRIPTION OF THE PREFERRED EMBODIMENTS

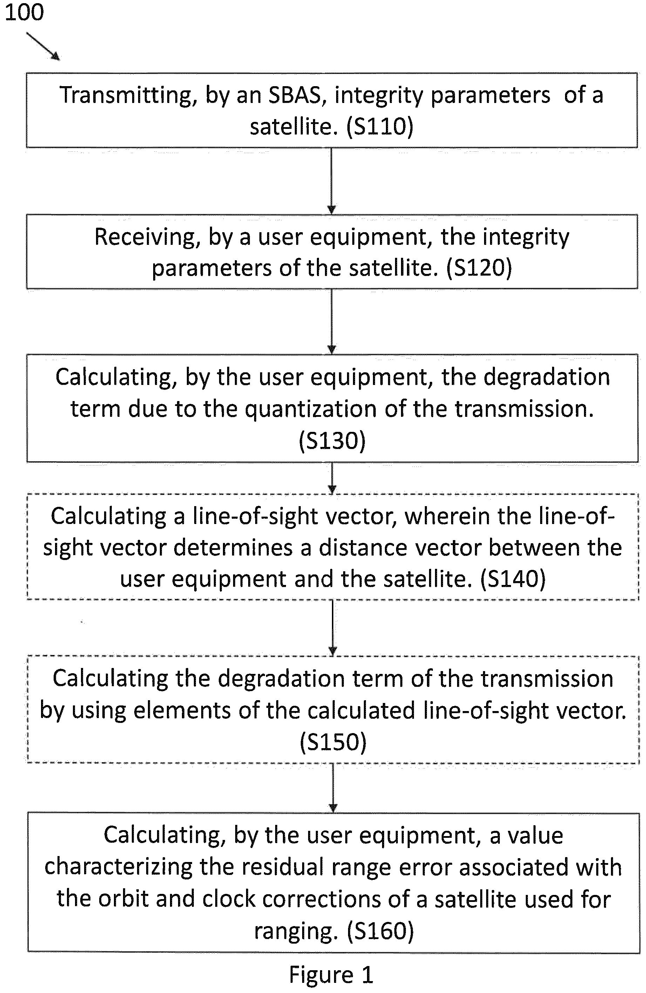

Figure 1 shows a flow diagram of a method of calculating quantization errors according to an embodiment described herein.

The method 100 takes place both onboard a satellite and in a user equipment. The user equipment may be situated on the ground or in space. The user equipment may be a vehicle, a mobile phone, a GNSS device or any other suitable equipment.

The method begins by transmitting S110 integrity parameters from a SBAS satellite. The satellite may be any GNSS tracking satellite, a surveillance satellite, an imaging satellite or any other suitable type of satellite. The integrity parameters may be preferably transmitted according to Minimum Operational Performance Standards (MOPS) and/or via industry standard message type 28, message type 32 or message type 40 without accounting for these quantization errors by the SBAS itself. In some embodiments, the satellite is not part of an SBAS but a standalone GNSS satellite. The data may be transmitted in packets that are suitable for reception on the ground. The packet sizes may be altered depending on the astral and/or ground conditions.

The method further comprises receiving S120 the integrity parameters of the satellite by a user equipment. As mentioned above, the user equipment may be part of a vehicle, a mobile phone, a GNSS device or any other suitable equipment which requires GNSS data.

The satellite and the user equipment will be described in further detail below.

The user equipment then calculates S130 the degradation term due to the quantization of the transmission from the satellite to the user equipment. The degradation term is calculated at user's side, by the user equipment deriving its own $C_{COVARIANCE}$ in the following way.

The calculation S130 of the degradation term begins by calculating S140 the line-of-sight vector between the satellite and the user equipment.

Calculation of user's line-of-sight vector v according to

$$\begin{bmatrix} \dfrac{R_{SV} - r_{user}}{\|R_{SV} - r_{user}\|_2} \\ \pm 1 \end{bmatrix} \tag{1.6}$$

wherein $R_{SV}$ is the satellite position, $r_{user}$ is the user position and the sign of the $\pm 1$ is dependent on the modeling of the satellite clock error.

The user equipment then uses the calculated elements of the line-of-sight vector in order to further calculate S150 the degradation term. The degradation term is then further calculated S150 by using elements of the calculated line-of-sight vector. Elements representing the first three components of the line-of-sight vector are denoted by $\alpha_1, \alpha_2, \alpha_3$ that is

$$v = [\alpha_1, \alpha_2, \alpha_3, \pm 1]^T \quad \text{with } \alpha_1^2 + \alpha_2^2 + \alpha_3^2 = 1 \tag{1.7}$$

Calculation of $C_1(\alpha_1, \alpha_2, \alpha_3)$ is as follows:

$$C_1(\alpha_1, \alpha_2, \alpha_3) := \left( |\alpha_1| + |\alpha_2| + |\alpha_3| + 1 \right)^2 \tag{1.8}$$

Calculation of $C_2(\alpha_2, \alpha_3)$ is as follows:

$$C_2(\alpha_2,\alpha_3) := \left( |\alpha_2| + |\alpha_3| + 1 \right)^2 \qquad (1.9)$$

And calculation of $C_3(\alpha_3)$ is as follows:

$$C_3(\alpha_3) := \left( |\alpha_3| + 1 \right)^2 \qquad (1.10)$$

Utilizing (1.7), $C_{COVARIANCA}(v)$ is set by:

$$C_{COVARIANCE}(v) := \frac{1}{2}\sqrt{C_1(\alpha_1,\alpha_2,\alpha_3) + C_2(\alpha_2,\alpha_3) + C_3(\alpha_3) + 1} \qquad (1.11)$$

In the above, should any of the elements not be able to be calculated due to, for example, corrupted data, the user equipment may replace the corrupted element with a pre-determined element or the user equipment may maintain the same element from the previous data packet. This may allow for a continuous calculation of the quantization effect without a severe deterioration in the calculated results.

At the side of the user equipment, calculation S160 of the characterization of the residual range error associated with the orbit corrections and clock corrections belonging to a dedicated satellite via

$$\sigma_{flt}^2 := \sigma_{XXRE,\text{uninflated}}^2 \cdot \left( \| Ev \|_2 + C_{COVARIANCE}(v) \right)^2 \cdot 2^{2(scale-5)} \qquad (1.12)$$

where $v$ is user's line-of-sight vector according to (1.6).

The skilled person understands that as the characterization of the residual range error associated with the orbit corrections and clock corrections is calculated at the user equipment side as opposed to the SBAS side, the error may be more accurate, thereby reducing the quantization error and the quantization effect.

In some embodiments, the degradation term is unable to be calculated by the user equipment due to external factors such as, for example, legacy conditions and legacy receivers. If this happens, the degradation term is replaced by a pre-determined factor.

In the above case, the user using the user equipment needs to calculate their projection of the somehow inflated covariance matrix $\lambda^2 R^T R$, $\lambda \geq 1$, onto his line-of-sight vector $v$, i.e. $7\lambda^2 v^T R^T R v$, where v is according to (1.6).

With the settings above, it holds

$$\lambda^2 v^T R^T R v = \lambda^2 \| Rv \|_2^2 = \lambda^2 P_{\min} \| Pv \|_2^2 \, 2^{2(scale-5)} \qquad (1.13)$$

Therefore, utilizing the triangle inequality,

$$\sqrt{\lambda^2 v^T R^T R v} = \lambda \| Rv \|_2 = \lambda \sqrt{P_{\min}} \| Pv \|_2 \, 2^{scale-5} \leq \lambda \sqrt{P_{\min}} \left( \| Pv - Ev \|_2 + \| Ev \|_2 \right) 2^{scale-5} \quad (1.14)$$

Thus we have to consider $Pv- Ev\|_2$ or more generally the upper triangular matrix $P$-$E$.

Due to the definition of the matrix E as the elementwise rounded upper triangular matrix $P$, there exists elements $\delta_1,...,\delta_{10}$, each with $|\delta_i| \leq \frac{1}{2}$, such that

$$P - E = \begin{pmatrix} \delta_1 & \delta_5 & \delta_6 & \delta_7 \\ 0 & \delta_2 & \delta_8 & \delta_9 \\ 0 & 0 & \delta_3 & \delta_{10} \\ 0 & 0 & 0 & \delta_4 \end{pmatrix} . \qquad (1.15)$$

Now, denoting the first three components of v by $\alpha_1$, $\alpha_2$, $\alpha_3$, that

is $v=[\alpha_1,\alpha_2,\alpha_3,\pm 1]^T$ and $\alpha_1^2 + \alpha_2^2 + \alpha_3^2 = 1$ , and
defining $j_1 := (1,5,6,7)$, $j_2 := (0,2,8,)$, $j_3 := (0,0,3,10)$ and $j_4 := (0,0,0,1)$, we get:

$$(P-E)v = \begin{pmatrix} \delta_1 & \delta_5 & \delta_6 & \delta_7 \\ 0 & \delta_2 & \delta_8 & \delta_9 \\ 0 & 0 & \delta_3 & \delta_{10} \\ 0 & 0 & 0 & \delta_4 \end{pmatrix} \begin{pmatrix} \alpha_1 \\ \alpha_2 \\ \alpha_3 \\ \pm 1 \end{pmatrix} = \begin{pmatrix} \sum_{i=1}^{3} \delta_{j_1(i)} \alpha_i \pm \delta_7 \\ \sum_{i=2}^{3} \delta_{j_2(i)} \alpha_i \pm \delta_9 \\ \delta_3 \alpha_3 \pm \delta_{10} \\ \pm \delta_4 \end{pmatrix} \qquad (1.16)$$

So we can calculate $\|Pv - Ev\|_2^2$ as:

$$\|Pv - Ev\|_2^2 = \left(\sum_{i=1}^{3} \delta_{j_1(i)} \alpha_i \pm \delta_7\right)^2 + \left(\sum_{i=2}^{3} \delta_{j_2(i)} \alpha_i \pm \delta_9\right)^2 + \left(\delta_3 \alpha_3 \pm \delta_{10}\right)^2 + \left(\pm\delta_4\right)^2 \qquad (1.17)$$

One straight forward way of bounding this equation is to use now $|\delta_i| \le \frac{1}{2}$ on each summand, giving

$$\left| \sum_{i=k}^{3} \delta_{j_k(i)} \alpha_i \pm \delta_{j_k(4)} \right| \le \frac{1}{2}\left(\sum_{i=k}^{3} |\alpha_i| + 1\right) \quad \text{for } k = 1,\ldots,4 . \qquad (1.18)$$

But as we will see in the following, this is only a special outcome of applying Hölder's inequality[1] on each summand. Therefore, in general, utilizing Hölder's inequality, it holds for $k = 1,\ldots,4$ with $p_k, q_k$ fulfilling $1 \le p_k, q_k \le \infty$ and

$$\frac{1}{p_k} + \frac{1}{q_k} = 1 \quad \text{where } \frac{1}{\infty} := 0 \ :$$

$$\left| \sum_{i=k}^{3} \delta_{j_k(i)} \alpha_i \pm \delta_{j_k(4)} \right| = \left| \left(\delta_{j_k}(k),\ldots,\delta_{j_k}(4)\right) \cdot \left(\alpha_k,\ldots,\alpha_3,\pm 1\right)^T \right| \le \left\| \begin{pmatrix} \delta_{j_k}(k) \\ \vdots \\ \delta_{j_k}(3) \\ \delta_{j_k}(4) \end{pmatrix} \right\|_{p_k} \left\| \begin{pmatrix} \alpha_k \\ \vdots \\ \alpha_3 \\ \pm 1 \end{pmatrix} \right\|_{q_k} \qquad (1.19)$$

[1] For $1 \le p, q \le \infty$ and $1/p + 1/q = 1$ where $1/\infty := 0$, it holds for every pair of sequences of numbers $x = (x_1,\ldots,x_n)$ and $y=(y_1,\ldots,y_n)$: $\left| \sum_{\ell=1}^{n} x_\ell y_\ell \right| \le \|x\|_p \|y\|_q$ where $\|x\|_p := \sqrt[p]{\sum_{\ell=1}^{n} |x_\ell|^p}$ .

Thus, using now $|\delta_i| \le \frac{1}{2}$, gives

$$\left| \sum_{i=k}^{3} \delta_{j_k(i)} \alpha_i \pm \delta_{j_k(4)} \right| \le \frac{1}{2} \underbrace{\left\| (1,\ldots,1)^T \right\|_{p_k}}_{4-k+1 \text{ ones}} \sqrt[q_k]{\sum_{i=k}^{3} |\alpha_i|^{q_k} + 1^{q_k}} = \frac{1}{2} \sqrt[p_k]{4-k+1} \sqrt[q_k]{\sum_{i=k}^{3} |\alpha_i|^{q_k} + 1} \qquad (1.20)$$

Now, we consider the following part of the right hand side of the previous inequality:

$$\sqrt[p_k]{4-k+1} \sqrt[q_k]{\sum_{i=k}^{3} |\alpha_i|^{q_k} + 1} = (5-k)^{1/p_k} \left\| (\alpha_k,\ldots,\alpha_3,1) \right\|_{q_k} = (5-k) \cdot (5-k)^{-1/q_k} \left\| (\alpha_k,\ldots,\alpha_3,1) \right\|_{q_k}$$

$$(1.21)$$

Choosing any real number $r_k$ with $q_k < r_k$, then from the well-known equivalence property of different $p$-norms[2] it holds

$$\left(5-k\right)\cdot\left(5-k\right)^{-1/q_k}\|\underbrace{\left(\alpha_k,\ldots,\alpha_3,1\right)}_{5-k\,\text{elements}}\|_{q_k}\le\left(5-k\right)\cdot\left(5-k\right)^{-1/r_k}\|\left(\alpha_k,\ldots,\alpha_3,1\right)\|_{r_k} \tag{1.22}$$

[2] For $1\le q\le r\le\infty$ it holds for every sequence of numbers $x=(x_1,\ldots,x_n)$ : $\|x\|_q\le n^{\frac{1}{q}-\frac{1}{r}}\|x\|_r$ .

Thus, defining $s_k$ via $\dfrac{1}{s_k}+\dfrac{1}{r_k}=1$ , it holds for all $1\le q_k<r_k\le\infty$ :

$$\frac{1}{2}\sqrt[p_k]{4-k+1}\sqrt[q_k]{\sum_{i=k}^{3}\left|\alpha_i\right|^{q_k}+1}\le\frac{1}{2}\sqrt[s_k]{4-k+1}\sqrt[r_k]{\sum_{i=k}^{3}\left|\alpha_i\right|^{r_k}+1} \tag{1.23}$$

That means, bounding expressions (1.20) using $p_k:=\infty$, $q_k:=1$, gives the minimal bounds

$$\frac{1}{2}1\cdot\left(\sum_{i=k}^{3}\left|\alpha_i\right|^1+1\right)^1=\frac{1}{2}\left(\sum_{i=k}^{3}\left|\alpha_i\right|+1\right) \tag{1.24}$$

among all possible $p_k,q_k$ fulfilling $1\le p_k,q_k\le\infty$ and $\dfrac{1}{p_k}+\dfrac{1}{q_k}=1$ . These minimal bounds are the same as the ones we have already calculated deriving inequality (1.18).

Utilizing these inequalities together with inequality (1.17) gives:

$$\left\|Pv-Ev\right\|_2^2\le\sum_{k=1}^{4}\left(\frac{1}{2}\left(\sum_{i=k}^{3}\left|\alpha_i\right|+1\right)\right)^2=\frac{1}{4}\sum_{k=1}^{4}\left(\sum_{i=k}^{3}\left|\alpha_i\right|+1\right)^2 \tag{1.25}$$

Abbreviating the different summands by $C_k(\alpha_k,\ldots,\alpha_3)$, i.e.

- 

$$C_1(\alpha_1,\alpha_2,\alpha_3):=\left(\left|\alpha_1\right|+\left|\alpha_2\right|+\left|\alpha_3\right|+1\right)^2$$

- 

$$C_2(\alpha_2,\alpha_3):=\left(\left|\alpha_2\right|+\left|\alpha_3\right|+1\right)^2$$

- 

$$C_3(\alpha_3):=\left(\left|\alpha_3\right|+1\right)^2$$

inequality (1.25) reads as follows

$$\left\|Pv-Ev\right\|_2^2\le\frac{1}{4}\left(C_1(\alpha_1,\alpha_2,\alpha_3)+C_2(\alpha_2,\alpha_3)+C_3(\alpha_3)+1\right) \tag{1.26}$$

Setting $p_k:=2$, $q_k:=2$ and remembering $\alpha_1^2+\alpha_2^2+\alpha_3^2=1$, it holds due to (1.23) and (1.24):

$$C_1(\alpha_1,\ldots,\alpha_3) \le (4-1+1)\left(\sum_{i=1}^{3} \alpha_i^2 + 1\right) = 4\cdot 2 \quad \text{for } k=1, \tag{1.27}$$

and

$$C_k(\alpha_k,\ldots,\alpha_3) \le (4-k+1)\left(\sum_{i=k}^{3} \alpha_i^2 + 1\right) \quad \text{for } k=2,\ldots,4, \tag{1.28}$$

which give an upper bound for the right hand side of inequality (1.26):

$$\frac{1}{4}\cdot 4\cdot 2 + \frac{1}{4}(4-2+1)\left(\sum_{i=2}^{3} \alpha_i^2 + 1\right) + \frac{1}{4}(4-3+1)\left(\sum_{i=3}^{3} \alpha_i^2 + 1\right) + \frac{1}{4}$$

$$= \frac{1}{4}\left(4\cdot 2 + 3\cdot\left(\alpha_2^2 + \alpha_3^2 + 1\right) + 2\cdot\left(\alpha_3^2 + 1\right) + 1\right) = \frac{1}{4}\left(14 + 3\left(\alpha_2^2 + \alpha_3^2\right) + 2\alpha_3^2\right)$$

$$= \frac{1}{4}\left(14 + 3\left(1-\alpha_1^2\right) + 2\alpha_3^2\right) \le \frac{1}{4}\left(14 + 3\cdot 1 + 2\cdot 1\right) = \frac{19}{4}. \tag{1.29}$$

Therefore,

$$\left\|Pv - Ev\right\|_2^2 \le \frac{1}{4}\left(C_1(\alpha_1,\alpha_2,\alpha_3) + C_2(\alpha_2,\alpha_3) + C_3(\alpha_3) + 1\right) \le \frac{19}{4}. \tag{1.30}$$

Finally, collecting equations (1.14) and inequality (1.26) results in:

$$\lambda^2 v^T R^T R v \quad \le \quad \lambda^2 \cdot P_{\min}\cdot\left(\|Pv - Ev\|_2 + \|Ev\|_2\right)\cdot 2^{2(scale-5)}$$

$$\le \quad \lambda^2\cdot P_{\min}\cdot\left(\|Ev\|_2 + \frac{1}{2}\sqrt{C_1(\alpha_1,\alpha_2,\alpha_3) + C_2(\alpha_2,\alpha_3) + C_3(\alpha_3) + 1}\right)^2\cdot 2^{2(scale-5)} \tag{1.31}$$

Usually, a SBAS system provides then essentially a discretized version of $\lambda^2 P_{\min}$ as $\sigma_{XXRE}^2$ (which is independent from the user), such that the user, getting $E$ as well as the scale, calculates a save bound of the projection of the inflated covariance matrix $\lambda^2 R^T R$ onto their line-of-sight vector v:

$$\sigma_{flt}^2 := \sigma_{XXRE,\text{uninflated}}^2\cdot\left(\|Ev\|_2 + \frac{1}{2}\sqrt{C_1(\alpha_1,\alpha_2,\alpha_3) + C_2(\alpha_2,\alpha_3) + C_3(\alpha_3) + 1}\right)^2\cdot 2^{2(scale-5)} \ge \lambda^2 v^T R^T R v$$

(1.32).

Therefore, the user equipment can assume that the upper bound of the degradation term is $\sqrt{19}/2$. As a result of this, in order to bound the degradation effect, if the user equipment cannot calculate S130 the degradation term, the user equipment may assume that the degradation term is 2.2 i.e. larger than $\sqrt{19}/2$. This may still allow for the user equipment to account for its own quantization error while still providing suitable results. In some embodiments, the degradation term is presumed to be $\sqrt{19}/2$, 2.3, 2.4 or any other suitable factor that is larger than $\sqrt{19}/2$. The user equipment may then use this pre-determined factor in the calculation S160 of the characterization of the residual range error associated with the orbit corrections and clock corrections.

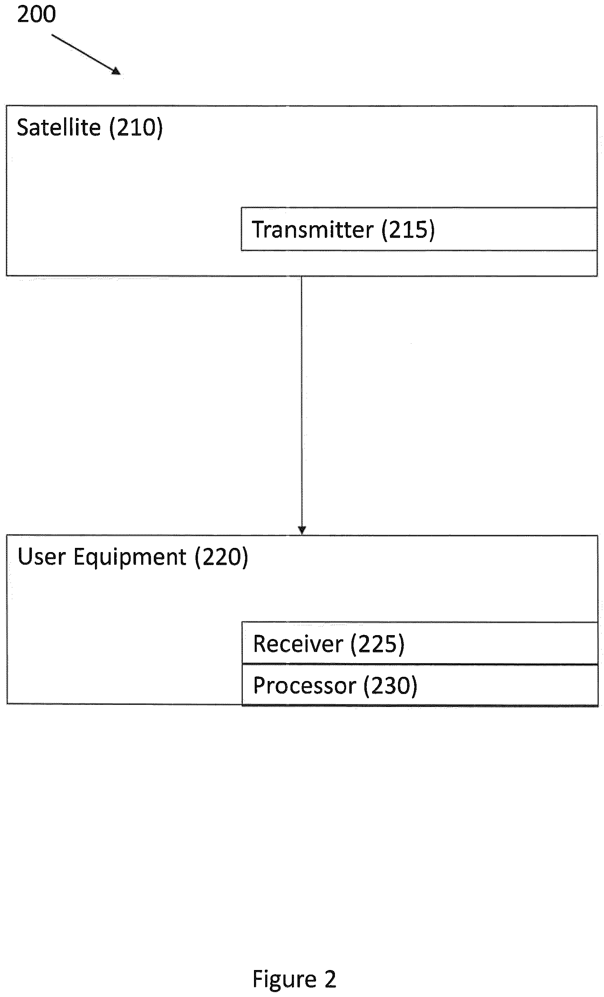

Figure 2 shows a block diagram of a system for calculating quantization errors according to an embodiment as described herein.

The system 200 comprises an SBAS satellite 210 and a user equipment 220. The satellite 210 comprises a transmitter 215 configured to send integrity parameters about a satellite to the user equipment 220. The user equipment 220 comprises a receiver 225 for receiving the transmitted data and a processor 230 coupled to the receiver 225 and configured to carry out the method 100 described above. The satellite 210 and the user equipment 220 may comprise any other suitable element which helps the functioning of the system 200. For example, the user equipment 220 may comprise a transmitter configured to transmit the calculations to an external computer, the user equipment 220 may comprise a screen coupled to the processor 230 configured to show the results of the calculations or the user equipment 220 may further comprise a memory configured to store the results of the calculations and/or the integrity parameters. The integrity parameters may comprise integrity parameters of the SBAS satellite and/or integrity parameters of a secondary satellite transmitting to the SBAS satellite.

No doubt many other effective alternatives will occur to the skilled person. It will be understood that the invention is not limited to the described embodiments and encompasses modifications apparent to those skilled in the art and lying within the scope of the claims appended hereto.

**Claims**

1. A method (100) for accounting for quantization errors in a Satellite Based Augmentation System, SBAS, wherein the method (100) comprises:

   transmitting (S110), by an SBAS, integrity parameters of a satellite;
   receiving (S120), by a user equipment, the integrity parameters of the satellite;
   calculating (S130), by the user equipment, a degradation term of the quantization of the transmission; and
   calculating (S160), by the user equipment, a value characterizing a residual range error associated with the orbit corrections and clock corrections belonging to the satellite by an equation comprising the calculated degradation term, wherein the characterization of the residual range error associated with the orbit corrections and clock corrections is calculated by:

$$\sigma^2_{flt} := \sigma^2_{XXRE,\text{uninflated}} \cdot \left( \| E v \|_2 + C_{COVARIANCE}(v) \right)^2 \cdot 2^{2(scale-5)}$$

   wherein $\sigma_{flt}$ is the characterization of the residual range error, wherein $\sigma^2_{XXRE,\text{uninflated}}$ is the characterization of the fast varying part of the covariance matrix belonging to the satellite, wherein E is a discretized Cholesky factor characterizing together with its scale the slow varying part of the covariance matrix, and wherein v is the line-of-sight vector and $C_{COVARIANCE}(v)$ is the degradation term of the quantization.

2. The method (100) of claim 1, wherein the degradation term is calculated (S130) by:

   calculating (S140) a line-of-sight vector, wherein the line-of-sight vector determines a distance vector between the user equipment and the satellite;
   calculating (S150) the degradation term due to the quantization of the transmission by using elements of the calculated line-of-sight vector (S140).

3. The method (100) of claim 2, wherein the line-of-sight vector is calculated (S140) by the equation:

$$\begin{bmatrix} \dfrac{R_{SV} - r_{user}}{\| R_{SV} - r_{user} \|_2} \\ \pm 1 \end{bmatrix}$$

   wherein $R_{SV}$ is the satellite position, $r_{user}$ is the user position and the sign of the $\pm 1$ is dependent on the modeling of a satellite clock error.

4. The method (100) of claim 2 or 3, wherein the degradation term is calculated (S150) by:

$$v = [\alpha_1, \alpha_2, \alpha_3, \pm 1]^T \quad \text{with } \alpha_1^2 + \alpha_2^2 + \alpha_3^2 = 1$$

wherein $\alpha_1$, $\alpha_2$ and $\alpha_3$ are the first three elements of the line-of-sight vector, and by:

$$C_1(\alpha_1, \alpha_2, \alpha_3) := \left( |\alpha_1| + |\alpha_2| + |\alpha_3| + 1 \right)^2 ;$$

$$C_2(\alpha_2, \alpha_3) := \left( |\alpha_2| + |\alpha_3| + 1 \right)^2 ;$$

$$C_3(\alpha_3) := \left( |\alpha_3| + 1 \right)^2 ;$$

and

$$C_{COVARIANCE}(v) := \frac{1}{2} \sqrt{C_1(\alpha_1, \alpha_2, \alpha_3) + C_2(\alpha_2, \alpha_3) + C_3(\alpha_3) + 1}$$

wherein $C_{COVARIANCE}(v)$ is the degradation term.

5. The method (100) of any preceding claims, wherein if the user equipment cannot calculate the degradation term (S130) of the quantization, the degradation term used by the user equipment is the transmitted value $C_{COVARIANCE}$ provided by system via an MT10-like or an MT37-like message.

6. The method (100) of claim 5, wherein the degradation term is a value larger than an upper bound of a quantization effect, wherein the value of the degradation term is greater than $\sqrt{19}/2$ .

7. The method (100) of claim 5 or 6, wherein the degradation term used is 2.2.

8. A system (200) for accounting for quantization errors in a Satellite Based Augmentation System, SBAS, wherein the system (200) comprises:

   a first satellite (210), wherein the first satellite (210) comprises a transmitter (215) configured to transmit integrity parameters of a second satellite; and
   a user equipment (220), wherein the user equipment (220) comprises a receiver (225) configured to receive the transmitted integrity parameters;
   wherein the user equipment (220) further comprises a processor (230) coupled to the processor (225) and configured to calculate a degradation term due to the quantization of the transmission and a value characterizing a residual range error associated with the orbit corrections and clock corrections belonging to the second satellite by an equation comprising the calculated degradation term, wherein the processor (230) of the user equipment (220) is further configured to calculate the characterization of the residual range error associated with the orbit corrections and clock corrections by:

$$\sigma_{flt}^2 := \sigma_{XXRE,\text{uninflated}}^2 \cdot \left( \| Ev \|_2 + C_{COVARIANCE}(v) \right)^2 \cdot 2^{2(scale-5)}$$

   wherein $\sigma_{flt}$ is the characterization of the residual range error, wherein $\sigma_{XXRE,\text{uninflated}}^2$ is the characterization of the fast varying part of the covariance matrix belonging to the second satellite, wherein E is a discretized Cholesky factor characterizing together with its scale the slow varying part of the covariance matrix, and wherein v is the line-of-sight vector and $C_{COVARIANCE}(v)$ is the degradation term of the quantization.

9. The system (200) of claim 8, wherein the processor (230) of the user equipment (220) is configured to calculate the degradation term due to the quantization of the transmission by:

calculating a line-of-sight vector, wherein the line-of-sight vector determines a distance vector between the user equipment (220) and the second satellite (210);

calculating the degradation term of the quantization by using elements of the calculated line-of-sight vector.

10. The system (200) of claim 9, wherein the processor (230) is further configured calculate the line-of-sight vector by the equation:

$$\begin{bmatrix} \dfrac{R_{SV} - r_{user}}{\left\| R_{SV} - r_{user} \right\|_2} \\ \pm 1 \end{bmatrix}$$

wherein $R_{SV}$ is the second satellite position, $r_{user}$ is the user position and the sign of the $\pm 1$ is dependent on the modeling of a satellite clock error.

11. The system (200) of claim 9 or 10, wherein the processor (230) is further configured to calculate the degradation term by:

$$v = [\alpha_1, \alpha_2, \alpha_3, \pm 1]^T \quad \text{with } \alpha_1^2 + \alpha_2^2 + \alpha_3^2 = 1$$

wherein $\alpha_1$, $\alpha_2$ and $\alpha_3$ are the first three elements of the line-of-sight vector, and by:

$$C_1(\alpha_1, \alpha_2, \alpha_3) := \left( |\alpha_1| + |\alpha_2| + |\alpha_3| + 1 \right)^2 ;$$

$$C_2(\alpha_2, \alpha_3) := \left( |\alpha_2| + |\alpha_3| + 1 \right)^2 ;$$

$$C_3(\alpha_3) := \left( |\alpha_3| + 1 \right)^2 ;$$

and

$$C_{COVARIANCE}(v) := \frac{1}{2} \sqrt{C_1(\alpha_1, \alpha_2, \alpha_3) + C_2(\alpha_2, \alpha_3) + C_3(\alpha_3) + 1}$$

wherein $C_{COVARIANCE}(v)$ is the degradation term.

12. The system (200) of any of claims 8 to 11, wherein if the processor (230) of the user equipment (220) cannot calculate the degradation term of the quantization, the degradation term used by the user equipment (220) is the transmitted value $C_{COVARIANCE}$ provided by system via an MT10-like or an MT37-like message.

13. The system (200) of claim 12, wherein the degradation term is a value larger than an upper bound of a quantization effect, wherein the value of the degradation term is greater than $\sqrt{19}/2$ .

**Patentansprüche**

1. Ein Verfahren (100) zum Berücksichtigen von Quantisierungsfehlern in einem Satellite Based Augmentation System, SBAS, wobei das Verfahren (100) umfasst:

Senden (S110) von Integritätsparametern eines Satelliten durch ein SBAS;
Empfangen (S120) der Integritätsparameter des Satelliten durch ein Benutzergerät;
Berechnen (S130) eines Degradationsterms der Quantisierung der Übertragung durch das Benutzergerät; und

Berechnen (S160) eines Wertes durch das Benutzergerät, der einen mit den Bahnkorrigierungen und Uhrenkorrekturen, die zu dem Satelliten gehören, verknüpften Reststreckenfehler charakterisiert, mittels einer Gleichung, die den berechneten Degradationsterm umfasst, wobei die Charakterisierung des mit den Bahnkorrigierungen und Uhrenkorrekturen verknüpften Reststreckenfehlers berechnet wird durch:

$$\sigma_{flt}^2 := \sigma_{XXRE,\text{uninflated}}^2 \cdot \left( \| E v \|_2 + C_{COVARIANCE}(v) \right)^2 \cdot 2^{2(scale-5)}$$

wobei $\sigma_{flt}$ die Charakterisierung des Reststreckenfehlers ist, wobei $\sigma_{XXRE,\text{uninflated}}^2$ die Charakterisierung des schnell variierenden Teils der Kovarianzmatrix, die zu dem Satelliten gehört, ist, wobei E ein diskretisierter Cholesky-Faktor ist, der zusammen mit seinem Skalierungsfaktor den langsam variierenden Teil der Kovarianzmatrix charakterisiert, und wobei v der Sichtlinienvektor ist und $C_{COVARIANCE}(v)$ der Degradationsterm der Quantisierung ist.

2.  Das Verfahren (100) nach Anspruch 1, wobei der Degradationsterm (S130) berechnet wird durch:

    Berechnen (S140) eines Sichtlinienvektors, wobei der Sichtlinienvektor einen Abstandsvektor zwischen dem Benutzergerät und dem Satelliten bestimmt;
    Berechnen (S150) des Degradationsterms aufgrund der Quantisierung der Übertragung unter Verwendung von Elementen des berechneten Sichtlinienvektors (S140).

3.  Das Verfahren (100) nach Anspruch 2, wobei der Sichtlinienvektor (S140) durch die Gleichung berechnet wird:

$$\begin{bmatrix} \dfrac{R_{SV} - r_{user}}{\|R_{SV} - r_{user}\|_2} \\ \pm 1 \end{bmatrix}$$

wobei $R_{SV}$ die Satellitenposition ist, $r_{user}$ die Benutzerposition ist und das Vorzeichen von $\pm 1$ von der Modellierung eines Satellitenuhrenfehlers abhängt.

4.  Das Verfahren (100) nach Anspruch 2 oder 3, wobei der Degradationsterm (S150) berechnet wird durch:

$$v = [\alpha_1, \alpha_2, \alpha_3, \pm 1]^T \quad \text{mit} \quad \alpha_1^2 + \alpha_2^2 + \alpha_3^2 = 1$$

wobei $\alpha 1$, $\alpha 2$ und $\alpha 3$ die ersten drei Elemente des Sichtlinienvektors sind, und durch:

$$C_1(\alpha_1, \alpha_2, \alpha_3) := \left( |\alpha_1| + |\alpha_2| + |\alpha_3| + 1 \right)^2 ;$$

$$C_2(\alpha_2, \alpha_3) := \left( |\alpha_2| + |\alpha_3| + 1 \right)^2 ;$$

$$C_3(\alpha_3) := \left( |\alpha_3| + 1 \right)^2 ;$$

und

$$C_{COVARIANCE}(v) := \frac{1}{2} \sqrt{C_1(\alpha_1, \alpha_2, \alpha_3) + C_2(\alpha_2, \alpha_3) + C_3(\alpha_3) + 1}$$

wobei $C_{COVARIANCE}(v)$ der Degradationsterm ist.

**5.** Das Verfahren (100) nach einem der vorhergehenden Ansprüche, wobei, wenn das Benutzergerät den Degradationsterm (S130) der Quantisierung nicht berechnen kann, der vom Benutzergerät verwendete Degradationsterm der übertragene Wert $C_{COVARIANCE}$ ist, der durch System über eine MT10-ähnliche oder eine MT37-ähnliche Nachricht bereitgestellt wird.

**6.** Das Verfahren (100) nach Anspruch 5, wobei der Degradationsterm ein Wert ist, der größer als eine obere Schranke eines Quantisierungseffekts ist, wobei der Wert des Degradationsterms größer als $\sqrt{19}/2$ ist.

**7.** Das Verfahren (100) nach Anspruch 5 oder 6, wobei der verwendete Degradationsterm 2,2 ist.

**8.** Ein System (200) zum Berücksichtigen von Quantisierungsfehlern in einem Satellite Based Augmentation System, SBAS, wobei das System (200) umfasst:

einen ersten Satelliten (210), wobei der erste Satellit (210) einen Sender (215) umfasst, der konfiguriert ist, Integritätsparameter eines zweiten Satelliten zu senden; und
ein Benutzergerät (220), wobei das Benutzergerät (220) einen Empfänger (225) umfasst, der konfiguriert ist, die gesendeten Integritätsparameter zu empfangen;
wobei das Benutzergerät (220) ferner einen Prozessor (230) umfasst, der mit dem Prozessor (225) gekoppelt ist und konfiguriert ist, einen Degradationsterm aufgrund der Quantisierung der Übertragung und einen Wert zu berechnen, der einen mit den Bahnkorrigierungen und Uhrenkorrekturen, die zu dem zweiten Satelliten gehören, verknüpften Reststreckenfehler charakterisiert, mittels einer Gleichung, die den berechneten Degradationsterm umfasst, wobei der Prozessor (230) des Benutzergeräts (220) ferner konfiguriert ist, die Charakterisierung des mit den Bahnkorrigierungen und Uhrenkorrekturen verknüpften Reststreckenfehlers zu berechnen durch:

$$\sigma_{flt}^2 := \sigma_{XXRE,\text{uninflated}}^2 \cdot \left( \| Ev \|_2 + C_{COVARIANCE}(v) \right)^2 \cdot 2^{2(scale-5)}$$

wobei $\sigma_{flt}$ die Charakterisierung des Reststreckenfehlers ist, wobei $\sigma_{XXRE,\text{uninflated}}^2$ die Charakterisierung des schnell variierenden Teils der Kovarianzmatrix, die zu dem zweiten Satelliten gehört, ist, wobei E ein diskretisierter Cholesky-Faktor ist, der zusammen mit seinem Skalierungsfaktor den langsam variierenden Teil der Kovarianzmatrix charakterisiert, und wobei v der Sichtlinienvektor ist und $C_{COVARIANCE}(v)$ der Degradationsterm der Quantisierung ist.

**9.** Das System (200) nach Anspruch 8, wobei der Prozessor (230) des Benutzergeräts (220) konfiguriert ist, den Degradationsterm aufgrund der Quantisierung der Übertragung zu berechnen durch:

Berechnen eines Sichtlinienvektors, wobei der Sichtlinienvektor einen Abstandsvektor zwischen dem Benutzergerät (220) und dem zweiten Satelliten (210) bestimmt;
Berechnen des Degradationsterms der Quantisierung unter Verwendung von Elementen des berechneten Sichtlinienvektors.

**10.** Das System (200) nach Anspruch 9, wobei der Prozessor (230) ferner konfiguriert ist, den Sichtlinienvektor durch die Gleichung zu berechnen:

$$\begin{bmatrix} \dfrac{R_{SV} - r_{user}}{\| R_{SV} - r_{user} \|_2} \\ \pm 1 \end{bmatrix}$$

wobei $R_{SV}$ die Position des zweiten Satelliten ist, $r_{user}$ die Benutzerposition ist und das Vorzeichen von $\pm 1$ von der Modellierung eines Satellitenuhrenfehlers abhängt.

**11.** Das System (200) nach Anspruch 9 oder 10, wobei der Prozessor (230) ferner konfiguriert ist, den Degradationsterm zu berechnen durch:

$$v = [\alpha_1, \alpha_2, \alpha_3, \pm 1]^T \quad \text{mit } \alpha_1^2 + \alpha_2^2 + \alpha_3^2 = 1$$

wobei $\alpha1$, $\alpha2$ und $\alpha3$ die ersten drei Elemente des Sichtlinienvektors sind, und durch:

$$C_1(\alpha_1, \alpha_2, \alpha_3) := \left( |\alpha_1| + |\alpha_2| + |\alpha_3| + 1 \right)^2 ;$$

$$C_2(\alpha_2, \alpha_3) := \left( |\alpha_2| + |\alpha_3| + 1 \right)^2 ;$$

$$C_3(\alpha_3) := \left( |\alpha_3| + 1 \right)^2 ;$$

und

$$C_{COVARIANCE}(v) := \frac{1}{2} \sqrt{C_1(\alpha_1, \alpha_2, \alpha_3) + C_2(\alpha_2, \alpha_3) + C_3(\alpha_3) + 1}$$

wobei $C_{COVARIANCE}(v)$ der Degradationsterm ist.

12. Das System (200) nach einem der Ansprüche 8 bis 11, wobei, wenn der Prozessor (230) des Benutzergeräts (220) den Degradationsterm der Quantisierung nicht berechnen kann, der vom Benutzergerät (220) verwendete Degradationsterm der übertragene Wert $C_{COVARIANCE}$ ist, der durch System über eine MT10-ähnliche oder eine MT37-ähnliche Nachricht bereitgestellt wird.

13. Das System (200) nach Anspruch 12, wobei der Degradationsterm ein Wert ist, der größer als eine obere Schranke eines Quantisierungseffekts ist, wobei der Wert des Degradationsterms größer als $\sqrt{19}/2$ ist.

## Revendications

1. Procédé (100) permettant de prendre en compte les erreurs de quantification dans un système d'augmentation par satellite, SBAS, le procédé (100) comprenant:

   la transmission (S110), par un SBAS, de paramètres d'intégrité d'un satellite;
   la réception (S120), par un équipement utilisateur, des paramètres d'intégrité du satellite;
   le calcul (S130), par l'équipement utilisateur, d'un terme de dégradation de la quantification de la transmission; et
   le calcul (S160), par l'équipement utilisateur, d'une valeur caractérisant une erreur de portée résiduelle associée aux corrections d'orbite et aux corrections d'horloge appartenant au satellite par une équation comprenant le terme de dégradation calculé, dans lequel la caractérisation de l'erreur de distance résiduelle associée aux corrections d'orbite et aux corrections d'horloge est calculée par l'équation:

$$\sigma_{flt}^2 := \sigma_{XXRE,\text{uninflated}}^2 \cdot \left( \| Ev \|_2 + C_{COVARIANCE}(v) \right)^2 \cdot 2^{2(scale-5)}$$

   dans laquelle $\sigma_{flt}$ est la caractérisation de l'erreur de portée résiduelle, dans lequel 2 $\sigma_{XXRE,\text{uninflated}}^2$ est la caractérisation de la partie à variation rapide de la matrice de covariance appartenant au satellite, dans lequel E est un facteur de Cholesky discrétisé caractérisant conjointement, avec son échelle, la partie à variation lente de la matrice de covariance, et dans lequel v est le vecteur de ligne de visée et $C_{COVARIANCE}(v)$ est le terme de dégradation de la quantification.

2. Procédé (100) selon la revendication 1, dans lequel le terme de dégradation est calculé (S130) par:

le calcul (S140) d'un vecteur de ligne de visée, le vecteur de ligne de visée déterminant un vecteur de distance entre l'équipement utilisateur et le satellite;

le calcul (S150) du terme de dégradation dû à la quantification de la transmission à l'aide d'éléments du vecteur de ligne de visée calculé (S140).

3. Procédé (100) selon la revendication 2, dans lequel le vecteur de ligne de visée est calculé (S140) à l'aide de l'équation suivante:

$$\begin{bmatrix} \dfrac{R_{SV}-r_{user}}{\|R_{SV}-r_{user}\|_2} \\ \pm 1 \end{bmatrix}$$

dans laquelle $R_{SV}$ est la position du satellite, $r_{user}$ est la position de l'utilisateur et le signe $\pm 1$ dépend de la modélisation d'une erreur d'horloge du satellite.

4. Procédé (100) selon la revendication 2 ou 3, dans lequel le terme de dégradation est calculé (S150) par l'équation:

$$v=[\alpha_1,\alpha_2,\alpha_3,\pm 1]^T \quad \text{avec} \quad \alpha_1^2+\alpha_2^2+\alpha_3^2=1$$

dans laquelle $\alpha_1$, $\alpha_2$ et $\alpha_3$ sont les trois premiers éléments du vecteur de ligne de visée, et par:

$$C_1(\alpha_1,\alpha_2,\alpha_3):=\left(|\alpha_1|+|\alpha_2|+|\alpha_3|+1\right)^2 ;$$

$$C_2(\alpha_2,\alpha_3):=\left(|\alpha_2|+|\alpha_3|+1\right)^2 ;$$

$$C_3(\alpha_3):=\left(|\alpha_3|+1\right)^2 ;$$

et

$$C_{COVARIANCE}(v):=\frac{1}{2}\sqrt{C_1(\alpha_1,\alpha_2,\alpha_3)+C_2(\alpha_2,\alpha_3)+C_3(\alpha_3)+1}$$

dans laquelle $C_{COVARIANCE}(v)$ est le terme de dégradation.

5. Procédé (100) selon l'une quelconque des revendications précédentes, dans lequel, si l'équipement utilisateur ne peut pas calculer le terme de dégradation (S130) de la quantification, le terme de dégradation utilisé par l'équipement utilisateur est la valeur transmise $C_{COVARIANCE}$ fournie par le système par le biais d'un message de type MT10 ou MT37.

6. Procédé (100) selon la revendication 5, dans lequel le terme de dégradation est une valeur supérieure à une limite supérieure d'un effet de quantification, la valeur du terme de dégradation étant supérieure à $\sqrt{19}/2$.

7. Procédé selon la revendication 5 ou 6, dans lequel le terme de dégradation utilisé est 2.2.

8. Système (200) permettant de prendre en compte les erreurs de quantification dans un système d'augmentation par satellite, SBAS, le système (200) comprenant:

un premier satellite (210), dans lequel le premier satellite (210) comprend un émetteur (215) configuré pour transmettre des paramètres d'intégrité d'un deuxième satellite; et

un équipement utilisateur (220), dans lequel l'équipement utilisateur (220) comprend un récepteur (225) configuré pour recevoir les paramètres d'intégrité transmis;

dans lequel l'équipement utilisateur (220) comprend en outre un processeur (230) couplé au processeur (225) et configuré pour calculer un terme de dégradation dû à la quantification de la transmission et une valeur caractérisant une erreur de portée résiduelle associée aux corrections d'orbite et aux corrections d'horloge appartenant au deuxième satellite par une équation comprenant le terme de dégradation calculé, dans lequel le processeur (230) de l'équipement utilisateur (220) est en outre configuré pour calculer la caractérisation de l'erreur de portée résiduelle associée aux corrections d'orbite et aux corrections d'horloge par l'équation:

$$\sigma_{flt}^2 := \sigma_{XXRE,\text{uninflated}}^2 \cdot \left( \| Ev \|_2 + C_{COVARIANCE}(v) \right)^2 \cdot 2^{2(scale-5)}$$

dans laquelle $\sigma_{flt}$ est la caractérisation de l'erreur de portée résiduelle, dans lequel $\sigma_{XXRE,\text{uninflated}}^2$ est la caractérisation de la partie à variation rapide de la matrice de covariance appartenant au satellite, dans lequel E est un facteur de Cholesky discrétisé caractérisant conjointement, avec son échelle, la partie à variation lente de la matrice de covariance, et dans lequel v est le vecteur de ligne de visée et $C_{COVARIANCE}(v)$ est le terme de dégradation de la quantification.

9. Système (100) selon la revendication 8, dans lequel le processeur (230) de l'équipement utilisateur (220) est configuré pour calculer le terme de dégradation dû à la quantification de la transmission par:

calcul (S140) d'un vecteur de ligne de visée, le vecteur de ligne de visée déterminant un vecteur de distance entre l'équipement utilisateur (220) et le deuxième satellite (210);

calcul du terme de dégradation de la quantification à l'aide d'éléments du vecteur de ligne de visée calculé.

10. Système (100) selon la revendication 9, dans lequel le processeur (230) est en outre configuré pour calculer le vecteur de ligne de visée à l'aide de l'équation suivante:

$$\begin{bmatrix} \dfrac{R_{SV} - r_{user}}{\| R_{SV} - r_{user} \|_2} \\ \pm 1 \end{bmatrix}$$

dans laquelle $R_{SV}$ est la position du deuxième satellite, $r_{user}$ est la position de l'utilisateur et le signe $\pm 1$ dépend de la modélisation d'une erreur d'horloge du satellite.

11. Système (200) selon la revendication 9 ou 10, dans lequel le processeur (230) est en outre configuré pour calculer le terme de dégradation par l'équation:

$$v = [\alpha_1, \alpha_2, \alpha_3, \pm 1]^T \quad \text{avec} \quad \alpha_1^2 + \alpha_2^2 + \alpha_3^2 = 1$$

dans laquelle $\alpha_1$, $\alpha_2$ et $\alpha_3$ sont les trois premiers éléments du vecteur de ligne de visée, et par l'équation:

$$C_1(\alpha_1, \alpha_2, \alpha_3) := \left( |\alpha_1| + |\alpha_2| + |\alpha_3| + 1 \right)^2 ;$$

$$C_2(\alpha_2, \alpha_3) := \left( |\alpha_2| + |\alpha_3| + 1 \right)^2 ;$$

$$C_3(\alpha_3) := \left( |\alpha_3| + 1 \right)^2 ;$$

et

$$C_{COVARIANCE}(v) := \frac{1}{2}\sqrt{C_1(\alpha_1,\alpha_2,\alpha_3) + C_2(\alpha_2,\alpha_3) + C_3(\alpha_3) + 1}$$

dans laquelle $C_{COVARIANCE}(v)$ est le terme de dégradation.

12. Système (200) selon l'une quelconque des revendications 8 à 11, dans lequel, si le processeur (230) de l'équipement utilisateur (220) ne peut pas calculer le terme de dégradation de la quantification, le terme de dégradation utilisé par l'équipement utilisateur (220) est la valeur transmise $C_{COVARIANCE}$ fournie par le système par le biais d'un message de type MT10 ou MT37.

13. Système (200) selon la revendication 12, dans lequel le terme de dégradation est une valeur supérieure à une limite supérieure d'un effet de quantification, la valeur du terme de dégradation étant supérieure à $\sqrt{19}/2$.

100

```
┌─────────────────────────────────────────────────┐
│  Transmitting, by an SBAS, integrity parameters  │
│           of a satellite. (S110)                 │
└─────────────────────────────────────────────────┘
                        │
                        ▼
┌─────────────────────────────────────────────────┐
│   Receiving, by a user equipment, the integrity  │
│       parameters of the satellite. (S120)        │
└─────────────────────────────────────────────────┘
                        │
                        ▼
┌─────────────────────────────────────────────────┐
│  Calculating, by the user equipment, the         │
│  degradation term due to the quantization of     │
│  the transmission. (S130)                        │
└─────────────────────────────────────────────────┘
                        │
                        ▼
┌─────────────────────────────────────────────────┐
│  Calculating a line-of-sight vector, wherein the │
│  line-of-sight vector determines a distance      │
│  vector between the user equipment and the       │
│  satellite. (S140)                               │
└─────────────────────────────────────────────────┘
                        │
                        ▼
┌─────────────────────────────────────────────────┐
│  Calculating the degradation term of the         │
│  transmission by using elements of the           │
│  calculated line-of-sight vector. (S150)         │
└─────────────────────────────────────────────────┘
                        │
                        ▼
┌─────────────────────────────────────────────────┐
│  Calculating, by the user equipment, a value     │
│  characterizing the residual range error         │
│  associated with the orbit and clock corrections │
│  of a satellite used for ranging. (S160)         │
└─────────────────────────────────────────────────┘
```

Figure 1

200

Satellite (210)

| Transmitter (215) |

User Equipment (220)

| Receiver (225) |
| Processor (230) |

Figure 2

## REFERENCES CITED IN THE DESCRIPTION

**Non-patent literature cited in the description**

- **WALTER TODD et al.** Message Type 28. *NTM 2001 - Proceedings of the 2001 National Technical Meeting of the Institute of Navigation*, 24 January 2001, 522-532
- **CATALAN C et al.** Improved Integrity Concept for Future GNSS Evolutions. *GNSS 2008 - Proceedings of the 21st International Technical Meeting of the Satellite Division of the Institute of Navigation (ION GNSS 2008)*, 19 September 2008, 2547-2557

- **AUTHIE T et al.** Integrity Based on MT28 for EGNOS: New Algorithm Formulation & Results. *GNSS 2017 - Proceedings of the 30th International Technical Meeting of the Satellite Division of the Institute of Navigation (ION GNSS + 2017)*, 29 September 2017, 1077-1088